Europäisches Patentamt

European Patent Office

Office européen des brevets

(19)

(11) Veröffentlichungsnummer: **0 071 274**
**A2**

(12) **EUROPÄISCHE PATENTANMELDUNG**

(21) Anmeldenummer: **82106885.5**

(22) Anmeldetag: **30.07.82**

(51) Int. Cl.³: **A 01 K 97/06**

(30) Priorität: **31.07.81 DE 3130220**

(43) Veröffentlichungstag der Anmeldung:
**09.02.83 Patentblatt 83/6**

(84) Benannte Vertragsstaaten:
**AT CH FR GB IT LI SE**

(71) Anmelder: **Hans Galle GmbH**
**Gotthardstrasse 23**
**D-8000 München 21(DE)**

(72) Erfinder: **Galle, Hans**
**Kaskadenweg 18**
**D-8000 München 60(DE)**

(74) Vertreter: **Kressin, Horst-R., Dr. et al,**
**DIEHL & KRESSIN Flüggenstrasse 17**
**D-8000 München 19(DE)**

(54) **Halterung für Angelhaken.**

(57) Die Erfindung betrifft eine Halterung für Angelhaken, insbesondere Fliegen und/oder Nymphen, wobei eine Halteleiste vorgesehen ist, in der Schlitze zur Aufnahme der Haken angeordnet sind und wobei die Haken in den Schlitzen magnetisch gehaltert werden. Die magnetische Halterung der Metallhaken erfolgt durch magnetische Eisenverbindungen, deren Magnetismus so groß ist, daß die Haken sicher in den Schlitzen gehaltert werden.

EP 0 071 274 A2

Croydon Printing Company Ltd.

Halterung für Angelhaken

Beschreibung

Die Erfindung betrifft eine Halterung für Angelhaken, insbesondere für Fliegen und/oder Nymphen, zum Angeln von Fischen.

Es ist bekannt, verschiedene Fliegenmuster zum Angeln von in strömenden Gewässern lebenden Fischen lose in flachen Schachteln aufzubewahren. Das lose Aufbewahren der Fliegen hat den Nachteil, daß die Fliegen beim Transport der Schachtel verrutschen und sich die Fliegen dabei ineinander verhaken und dabei die empfindlichen Schwänze und Hecheln beschädigt werden. Es ist auch bekannt, auf den Schachtelboden Federleisten mit beweglichen Zacken anzubringen, wobei die Haken der Fliegen unter die beweglichen Zacken geklemmt werden. Diese Art der Halterung der Fliegen hat jedoch den Nachteil, daß die Fliegen flach an den Boden der Schachtel angedrückt werden und dabei die Hecheln plattgedrückt werden. Diese bekannte Art der Halterung ist insbesondere dann von Nachteil, wenn nasse Fliegen unter die Federleisten geklemmt werden und die Fliegen dann im nassen Zustand gedrückt werden. Nach dem Trocknen sind diese Fliegen meist unbrauchbar, da sich die Hecheln nicht mehr in den Ausgangszustand zurückstellen.

Es wurde daher eine Halterung für Angelhaken, insbesondere für Fliegen und/oder Nymphen gewünscht, die die Aufbewahrung mehrerer Fliegen und Nymphen getrennt voneinander so ermöglicht, daß die Hecheln während der Aufbewahrung nicht gedrückt werden und ein ungehindertes und freies Trocknen der nassen Fliegen gewährleistet wird. Die Form der Fliege und die Wiederverwendbarkeit der Fliege sollen durch die Aufbewahrung in der Fliegenschachtel nicht beeinträchtigt werden.

Dies wird durch eine Halterung erreicht, die gekennzeichnet ist durch eine Leiste, in der Schlitze vorgesehen sind, in die die Angelhaken und/oder die Haken der Fliegen einsetzbar sind und in denen die Haken magnetisch gehaltert werden.

Die erfindungsgemäße Halterung hat den Vorteil, daß jede Fliege einen gesonderten Platz auf der Halteleiste einnimmt und dort so sicher gehaltert wird, daß sie auch, wenn die Schachtel transportiert oder geschüttelt wird, nicht verrutscht. Die erfindungsgemäße Halteleiste ermöglicht außerdem eine übersichtliche und getrennte Anordnung der verschiedenen Fliegen nebeneinander bzw. getrennt voneinander. Die Haken der Fliegen und/oder Nymphen werden in die Schlitze der Halteleisten eingesetzt, so daß die Hecheln frei und aufrecht oberhalb der Leiste angeordnet sind. Diese Anordnung ist besonders vorteilhaft, da selbst nasse Fliegen sofort und ohne vorherige Trocknung in die Schlitze der Halteleiste eingesetzt werden können und dann während der Aufbewahrung getrocknet werden. Die Hecheln und/oder die Schwänze und/oder die Flügel der Fliegen liegen nicht auf der Halteleiste oder dem Boden der Fliegenschachtel auf und werden so nicht flachgedrückt während der Trocknung bzw. Aufbewahrung. Dadurch wird eine hohe Lebensdauer der Fliegen garantiert, so daß die in der erfindungsgemäßen Halteleiste gehalterten Fliegen mehrfach verwendet werden können, ohne daß die Qualität der Fliege durch die Lagerung beeinträchtigt wird. Die erfindungsgemäße Halterung der Fliegen ermöglicht es sogar, daß die Schachtel, in der die Halteleisten zur Halterung der Fliegen angeordnet sind, völlig durchnäßt wird, ohne daß dadurch die erfindungsgemäß gehalterten Fliegen in ihrer Gestalt oder ihrer Qualität beeinträchtigt werden, da die Fliegen in der Schachtel frei und trotzdem sicher einer Trocknung unterzogen werden können.

Die Halteleiste gemäß der Erfindung besteht vorzugsweise aus einem magnetischen Werkstoff, insbesondere einer magnetischen Eisenoxidverbindung oder einer anderen magnetischen Metallegierung. Der Magnetismus der Halteleisten muß jedoch nur so groß sein, daß übliche Fliegen, die aus einem Metallhaken mit Körper und Hecheln und gegebenenfalls einem Flügel und einem Schwanz bestehen, fest genug gehalten werden.

Die Halteleiste weist vorzugsweise eine Dicke auf, die ausreicht, um zumindest einen Teil eines üblichen Angelhakens in einem Schlitz aufzunehmen, wobei nur der untere Teil mit dem Widerhaken in den Schlitz der Halteleiste eingesetzt ist und der andere Teil des Hakens mit der Fliege bzw. Insektenimitation oberhalb der Leiste angeordnet ist.

Die Schlitze sind vorzugsweise nebeneinander in der Halteleiste vorgesehen, wobei der Abstand voneinander so groß ist, daß sich die nebeneinander angeordneten Fliegen nicht gegenseitig behindern. Es kann jedoch ein kleinerer Abstand vorgesehen sein, so daß zwischen den Fliegen auch einzelne Angelhaken, Nymphen oder Streamer angeordnet werden können. Der Schlitz in der Halteleiste ist vorzugsweise so breit, daß der Widerhaken des Angelhakens ohne Schwierigkeiten eingeschoben werden kann und in dem Schlitz gehaltert wird. Der Schlitz ist vorzugsweise nicht zu breit ausgebildet, damit der Haken möglichst aufrecht in dem Schlitz steht. Die Schlitze zur Halterung der Haken, insbesondere der Widerhaken der einzelnen Angelhaken, können sowohl einseitig als auch beidseitig geöffnet sein. Es ist auch möglich, Schlitze in den Halteleisten vorzusehen, deren Endseiten geschlossen sind. Es wird jedoch bevorzugt, Schlitze mit einer einseitigen Öffnung vorzusehen, da dadurch das Einschieben der Haken in den Schlitz erleichtert wird. Der Halteschlitz ist zumindest so tief ausgebildet, daß wenigstens ein Teil des Hakens, insbesondere die Spitze des Hakens und der Widerhaken, in den Schlitz einsteckbar sind.

Nach einer Ausgestaltung der Erfindung kann die Halteleiste aus einem magnetischen Werkstoff bestehen und der magnetische Werkstoff mit einer Abdeckung aus Metall, Holz Kunststoff oder Glas abgedeckt sein,wobei die Schlitze zur Halterung der Haken vorzugsweise nur in der Abdeckung vorgesehen sind. Die Abdeckung besteht vorzugsweise aus Kunststoff. Die Abdeckung kann die Halteleiste vollständig abdecken oder nur einen Teil davon. Wenn nur ein Teil der Halteleiste abgedeckt ist, dann befindet sich dieser vorzugsweise auf der oberen Oberfläche der Halteleiste. Die Abdeckung kann mit der magnetischen Halteleiste verschweißt, verklebt oder auf andere übliche Art und Weise verbunden sein. Die in die Abdeckung eingelassenen Schlitze sind so breit angeordnet, daß der Haken eingelassen werden kann und vorzugsweise so tief angeordnet, daß zumindest ein Teil des Hakens, insbesondere die Spitze des Hakens und der Widerhaken, aufnehmbar ist. Dies hat den Vorteil, daß der Rest des Hakens mit der Fliege senkrecht in dem Schlitz angeordnet ist und so die Hecheln vor und oberhalb der Halteleiste angeordnet sind und die Hecheln so nicht auf die Halteleiste aufgedrückt werden. Dies hat den Vorteil, daß die Hecheln in ihrer Gestalt nicht beeinträchtigt werden und auch nasse Fliegen ungehindert in der erfindungsgemäßen Halterung getrocknet werden können.

Die erfindungsgemäßen Halteleisten können stabförmig, bogenförmig oder in anderer üblicher Form ausgebildet sein und zu mehreren in einer Schachtel angeordnet sein. Eine übliche Fliegenschachtel enthält vorzugsweise zwei bis fünf, insbesondere drei bis vier, Halteleisten, in denen etwa sechs bis acht Schlitze angeordnet sind.

Ein weiterer Vorteil der erfindungsgemäßen Halterung liegt darin, daß die empfindlichen Spitzen und Widerhaken der Haken durch die Lagerung in den Schlitzen während des Transports geschützt sind.

Gemäß einer Ausgestaltung der Erfindung weist die Halteleiste eine Dicke auf, die ausreicht, um einen üblichen Haken in einem Schlitz aufzunehmen, wobei der Schlitz insbesondere 4 bis 20 mm dick ist. Die Schlitze sind vorzugsweise nebeneinander in der Halteleiste angeordnet, wobei der Abstand voneinander so groß ist, daß sich die in die Schlitze einsetzbaren Fliegen und/oder Nymphen nicht gegenseitig behindern. Die Schlitze in der Halteleiste sind so breit, daß ein üblicher Angelhaken einschiebbar ist, insbesondere ist der Schlitz 1 bis 4 mm, vorzugsweise 1 bis 3 mm, breit und mindestens an einer Seite offen. Die Schlitze in den Halteleisten können auch an beiden Seiten geschlossen sein. Dies kann dann von Vorteil sein, wenn besonders kleine Haken in die Schlitze eingesetzt werden. Die Schlitze sind in die Halteleisten so tief eingelassen, daß zumindest ein Teil des Hakens in den Schlitz einsteckbar ist und so in dem Schlitz sicher gehalten wird. Die Tiefe des Schlitzes beträgt insbesondere 2 bis 8 mm, vorzugsweise 4 bis 6 mm.

Die Halteleiste aus dem magnetischen Material kann mit einer Abdeckung ausgerüstet sein aus Kunststoff, Holz, Glas oder Metall, wobei dann die Schlitze zur Halterung der Angelhaken vorzugsweise in dieser Abdeckung vorgesehen sind. Die Abdeckung auf der Halteleiste aus magnetischem Material deckt zumindest die obere Oberfläche der Halteleiste teilweise ab. Die Schlitze in der Abdeckung entsprechen in ihren Abmessungen, wie oben angegeben, den Schlitzen bei der Halteleiste. So beträgt z.B. die Tiefe der Schlitze in der Abdeckung etwa 2 bis 8 mm, insbesondere 4 bis 6 mm, und die Breite des Schlitzes beträgt etwa 1 bis 4 mm.

Die Halteleiste aus magnetischem Material ist stabförmig oder bogenförmig ausgebildet,und mehrere Halteleisten sind in der Aufbewahrungsschachtel so im Abstand voneinander anordbar, daß sich die in die Schlitze eingesetzten Fliegen oder Nymphen nicht gegenseitig behindern.

Die Erfindung wird anhand der folgenden Zeichnungen näher erläutert.

Fig. 1    zeigt mehrere Halteleisten, angeordnet in einer Schachtel;

Fig. 2    zeigt eine Ausgestaltung der Halteleisten nach Fig. 1.

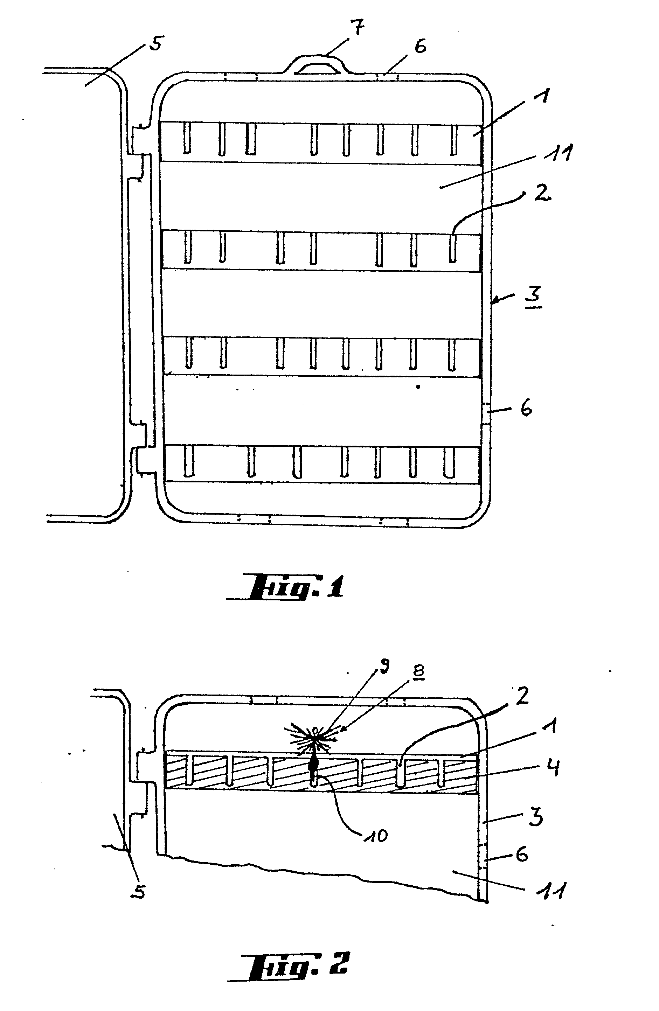

Fig. 1 zeigt eine magnetische Halteleiste 1 mit nebeneinander angeordneten Schlitzen 2. Die Halteleiste ist stabförmig ausgebildet, und im vorliegenden Beispiel sind vier stabförmige Halteleisten 1 in einer Schachtel 3 angeordnet. Die Schlitze 2 in den Halteleisten 1 sind parallel nebeneinander angeordnet. Die Fig. 1 zeigt eine Draufsicht auf eine geöffnete Schachtel, wobei links der Dekkel 5 der Schachtel andeutungsweise dargestellt ist. In der Stirnseite oder in der Seitenfläche der Schachtel sind Lüftungslöcher 6 vorgesehen, die in den Figuren gestrichelt dargestellt sind. Am oberen Rand der Schachtel ist eine Öse 7 vorgesehen, die der Aufhängung der Schachtel dient. Über diese Öse kann die Schachtel z.B. an der Kleidung des Anglers befestigt werden.

Fig. 2 zeigt eine Ausgestaltung der Erfindung mit einer magnetischen Halteleiste 1. Auf die Halteleiste 1 ist eine Abdeckung 4 aufgebracht, die im vorliegenden Beispiel zwei Seitenflächen der Halteleiste abdeckt, und zwar die obere Oberfläche und eine seitliche Seitenfläche der Halteleiste. Die Abdeckung 4 ist mit parallel nebeneinander angeordneten Schlitzen ausgerüstet. Die Abdeckung 4 besteht vorzugsweise aus Kunststoff oder nichtmagnetischem Metall. Ein bevorzugtes Material für die Abdeckung ist z.B. Plexiglas. In einen der Schlitze 2 ist eine Fliege 8 eingesetzt. Der Haken 10 der aufrechtstehenden Fliege 8 wird magnetisch in dem Schlitz 2 gehalten. Die Hecheln 9 der Fliege sind frei und unbehindert vor der Halteleiste 1 angeordnet, so daß sie weder mit dem Boden 11 der Schachtel 3 noch mit dem Deckel 5 (bei geschlossener Schachtel) in Berührung kommen. Durch das Einschieben des Widerhakens in den Schlitz 2 wird sichergestellt, daß die Hecheln 9 auch nicht auf die Halteleiste 1 aufgedrückt werden.

# DIEHL & KRESSIN
### PATENTANWÄLTE · EUROPEAN PATENT ATTORNEYS
Zugelassen bei den deutschen und europäischen Patentbehörden

Flüggenstraße 17 · D-8000 München 19

**0071274**

26. Juli 1982

G 1928-EU   DrK/ks

Hans Galle GmbH
Gotthardstr. 23
8000 München 21

Halterung für Angelhaken

Patentansprüche

1. Halterung für Angelhaken, insbesondere von Fliegen und/oder Nymphen,
g e k e n n z e i c h n e t   d u r c h
eine Halteleiste (1), in der Schlitze (2) zur Aufnahme der Haken vorgesehen sind, und wobei die Haken in den Schlitzen magnetisch gehaltert werden.

2. Halterung nach Anspruch 1, dadurch gekennzeichnet, daß die Halteleiste (1) aus einer magnetischen Eisenoxidverbindung besteht und der Magnetismus der Halteleiste (1) so groß ist, daß eine Fliege oder Nymphe sicher gehaltert wird.

3. Halterung nach Anspruch 1, dadurch gekennzeichnet, daß die Halteleiste (1) eine Dicke aufweist, die ausreicht, um einen üblichen Haken in einem Schlitz aufzunehmen, insbesondere 4 bis 20 mm dick ist.

4. Halterung nach einem der vorhergehenden Ansprüche, dadurch gekennzeichnet, daß die Schlitze (2) nebeneinander in der Halteleiste angeordnet sind, wobei der Abstand voneinander so groß ist, daß sich die in die Schlitze (2) einsetzbaren Fliegen nicht gegenseitig behindern.

5. Halterung nach einem der Ansprüche 1 bis 5, dadurch gekennzeichnet, daß die Schlitze (2) so breit sind, daß ein üblicher Haken einschiebbar ist, insbesondere 1 bis 4 mm breit sind, und an mindestens einer Seite offen oder an beiden Seiten geschlossen sind.

6. Halterung nach einem der vorhergehenden Ansprüche, dadurch gekennzeichnet, daß die Schlitze so tief in die Halteleiste eingelassen sind, daß zumindest ein Teil des Hakens in den Schlitz einsteckbar ist, insbesondere 2 bis 8 mm tief sind.

7. Halterung nach Anspruch 1, dadurch gekennzeichnet, daß die Halteleiste aus einem magnetischen Werkstoff besteht, und auf dem magnetischen Werkstoff eine Abdeckung (4) aus Metall, Kunststoff, Holz oder Glas aufgebracht ist, in der die Schlitze (2) zur Halterung der Haken angeordnet sind.

8. Halterung nach Anspruch 7, dadurch gekennzeichnet, daß die Abdeckung (4) zumindest die obere Oberfläche der Halteleiste (1) abdeckt.

9. Halterung nach Anspruch 7 oder 8, dadurch gekennzeichnet, daß die Schlitze in der Abdeckung so tief sind, daß zumindest ein Teil des Hakens aufnehmbar ist, insbesondere 2 bis 8 mm tief sind.

10. Halterung nach Anspruch 7 oder 8, dadurch gekennzeichnet, daß die Halteleiste (1) stabförmig oder bogenförmig ausgebildet ist, und daß mehrere Halteleisten in einer Aufbewahrungsschachtel (3) so im Abstand voneinander anordbar sind, daß sich die in die Schlitze (2) eingesetzten Fliegen nicht gegenseitig behindern.

**Fig. 1**

**Fig. 2**